# EUROPÄISCHE PATENTSCHRIFT

(11) **EP 3 570 959 B1**
(45) Veröffentlichungstag und Bekanntmachung des Hinweises auf die Patenterteilung: **21.04.2021**
(21) Anmeldenummer: 18703693.4
(22) Anmeldetag: 18.01.2018
(51) Int. Cl.: B01D 46/00

(54) **UMGEBUNGSLUFTREINIGUNGSVORRICHTUNG UND STRASSENFAHRZEUG MIT UMGEBUNGSLUFTREINIGUNGSVORRICHTUNG**
AMBIENT AIR PURIFICATION DEVICE AND ROAD VEHICLE HAVING AN AMBIENT AIR PURIFICATION DEVICE
DISPOSITIF D'ÉPURATION D'AIR AMBIANT ET VÉHICULE ROUTIER COMPRENANT UN DISPOSITIF D'ÉPURATION D'AIR AMBIANT

(30) Priorität: 18.01.2017 DE 102017000412; 22.05.2017 DE 102017004864; 19.07.2017 DE 102017006794
(43) Veröffentlichungstag der Anmeldung: 27.11.2019
(73) Patentinhaber: Mann+Hummel GmbH, 71636 Ludwigsburg (DE)
(72) Erfinder: KELLER, Florian, 71640 Ludwigsburg (DE); PELZ, Andreas, 70806 Kornwestheim (DE); KLEIN, Gunnar-Marcel, 71720 Oberstenfeld (DE); LÖHL, Thomas, 74395 Mundelsheim (DE); MÜLLER, Thilo, 76189 Karlsruhe (DE); SCHULZ, Christoph, 70569 Stuttgart (DE)
(74) Vertreter: Mann + Hummel Intellectual Property
(86) Internationale Anmeldenummer: PCT/EP2018/051226
(87) Internationale Veröffentlichungsnummer: WO 2018/134314

(56) Entgegenhaltungen:
- WO-A1-2009/155809
- KR-A- 20140 147 553
- KR-A- 20150 116 014
- US-A1- 2010 095 924
- US-B1- 9 308 484

## Beschreibung

### Technisches Gebiet

Die Erfindung bezieht sich auf eine Umgebungsluftreinigungsvorrichtung, die insbesondere zur Abscheidung von Stäuben, insbesondere Feinstäuben, und/oder Gasen ausgebildet ist. Ferner bezieht sich die vorliegende Erfindung auf ein Straßenfahrzeug, insbesondere, aber nicht hierauf beschränkt, einen Personenkraftwagen oder einen Lastkraftwagen, insbesondere einen leichten Lastkraftwagen, der eine Umgebungsluftreinigungsvorrichtung aufweist.

Aufgrund der fortschreitenden Urbanisierung besteht vor allem in Ballungszentren das Problem, dass die Umgebungsluft durch Industrieabgase, den Straßenverkehr und private Feuerstätten vor allem bei widrigen Wetterlagen (kein Regen, Inversion, geringe Windgeschwindigkeiten, kein Luftaustausch zwischen Höhenschichten) Grenzwerte für Feinstaub und/oder Gase wie Ozon, NOₓ, CO um ein Vielfaches überschritten werden können.

Es ist ein bereits im Stand der Technik dokumentierter Ansatz, die ohnehin existierenden Fahrzeugbestände (beispielsweise in Deutschland im Jahr 2014 etwa 44 Mio., in China mehr als 106 Mio. Stück) als mobile Umgebungsluftreiniger einzusetzen.

### Stand der Technik

In der DE 20 2006 019 335 U1 wird eine Feinstaub-Absaugvorrichtung für ein Fahrzeug beschrieben, die am Unterboden des Fahrzeugs angeordnet ist und zur Filtration des in den Fahrzeuginnenraum einzuleitenden Luftstroms eingesetzt wird. Die Feinstaub-Absaugvorrichtung weist in einem Gehäuse ein Gebläse auf, das einen Luftstrom aus der Umgebung in das Gehäuse einsaugt und einem Filterelement zuleitet. Zur Unterstützung der Zufuhr des Luftmassenstroms in die Feinstaub-Absaugvorrichtung ist an dem Gehäuse ein hervorstehendes Strömungsleitblech angeordnet.

Ferner ist aus der JP H04297341 A1 eine Absaugvorrichtung bekannt, die an einem Lastkraftwagen montiert ist. Dort ist zwischen Fahrerkabine und Kofferaufbau eine Ansaughutze vorgesehen, über die die zu reinigende Luft einer Reinigungsvorrichtung, die längs der Fahrzeuglängsachse in einem unter dem Kofferaufbau liegenden Bereich angeordnet ist, zugeführt wird. Die Reinigungsvorrichtung weist ein Gebläse auf, um unter möglichst vielen Betriebsbedingungen, auch im Stand, eine Durchströmung zu erreichen.

Aus der WO 2004/080740 A1 ist ein Kraftfahrzeug mit einem Außenluftfilter bekannt, der in einem Bereich der Einwirkung der Hinterräder des Fahrzeugs angeordnet ist, so beispielsweise in einer Radhausschale oder als Teil eines hinteren Schmutzfängers. Nachteilig lassen sich in den dort beschriebenen Bauräumen kaum nennenswerte Filterflächen unterbringen, um eine sinnvolle Luftmenge zu filtern.

Ferner sind passiv durchströmte Systeme aus der WO 2005/094969 A1 (Anordnung an der Seitenwand eines Fahrzeugs) und US 2006/0107636 A1 (Anordnung auf dem Dach) bekannt.

Aus DE 20 2005 005 673 U1 ist eine passive Umgebungsluftreinigungsvorrichtung bekannt, die unter einem hinteren Stoßfänger angeordnet ist und deren Filterelement vertikal durchströmt wird, weshalb zumindest einströmseitig eine Hutze vorzusehen ist, was einen unnötigen Druckverlust erzeugt.

Aus der WO 2009/105800 A1 ist eine Umgebungsluftreinigungsvorrichtung bekannt, die entweder auf dem Dach eines Lastkraftwagens oder im Bereich der Fahrzeugfront angeordnet ist, wobei jeweils Fahrzeugteile stromab des Filters im Strömungsweg stehen.

Aus der KR 2015 0116014 A ist eine an einem Straßenfahrzeug fest montierte Umgebungsluftreinigungsvorrichtung bekannt, die in einen Bereich einer Motorhaube oder auf einem Dach angeordnet ist.

Aus der US 9 308 484 B1 ist eine an einem Straßenfahrzeug fest montierte Umgebungsluftreinigungsvorrichtung bekannt, die zumindest teilweise in einem Bereich einer Heckstoßstange vorliegt.

Aus der KR 2014 0147553 A ist eine an einem Straßenfahrzeug fest montierte Umgebungsluftreinigungsvorrichtung bekannt, die in einem Frontbereich, Dachbereich oder Heckbereich vorliegt.

Schließlich offenbart die US 2010/095924 A1 eine voll fahrzeugintegrierte Umgebungsluftreinigungsvorrichtung, die in Ausführungen im Bereich einer Front- oder Heckstoßstange, eines Windabweisers oder eines Karosseriehohlraums im Frontbereich angeordnet sein kann.

Die aus dem Stand der Technik bekannten Lösungen sind nachteilig dauerhaft an den Fahrzeugen befestigt. Es ist jedoch so, dass o. g. Wetterlagen mit schlechter Luftqualität, insbesondere im Hinblick auf Partikel- und Schadgasbelastung, insbesondere erhöhter Feinstaubbelastung, meist nur über einen begrenzten Zeitraum vorliegen. Es wäre daher wünschenswert, ein Straßenfahrzeug nur wahlweise mit der Umgebungsluftreinigungsvorrichtung ausstatten zu können.

### Offenbarung der Erfindung

Der Erfindung liegt daher die Aufgabe zugrunde, o. g. Nachteile des Standes der Technik zu überwinden, insbesondere besteht die Aufgabe darin, eine Umgebungsluftreinigungsvorrichtung anzugeben, die sich dadurch auszeichnet, dass sie einfach, d. h. möglichst auch von technisch nicht versierten Endnutzern, und schnell an ein Straßenfahrzeug an- und von diesem wieder abbaubar ist.

Diese Aufgabe wird gelöst durch eine Umgebungsluftreinigungsvorrichtung mit den Merkmalen des Anspruchs 1 und ein Straßenfahrzeug mit den Merkmalen des Anspruchs 11.

Weiterbildungen der Erfindung sind jeweils in den abhängigen Ansprüchen angegeben.

Eine solche wahlweise Montierbarkeit einer Umgebungsluftreinigungsvorrichtung an ein Straßenfahrzeug ist von besonderem Interesse, wenn in Zeiten mit hoher Schadstoffbelastung für Straßenfahrzeuge mit zu hohen Netto-Emissionen Fahrverbote für betroffene Gebiete bestehen. In einem solchen Szenario könnte der Endnutzer durch wahlweises Befestigen der Umgebungsluftreinigungsvorrichtung auf seinem Fahrzeug ein solches Fahrverbot umgehen.

Die erfindungsgemäße Umgebungsluftreinigungsvorrichtung für ein Straßenfahrzeug ist insbesondere zur Entfernung von Stäuben, insbesondere Feinstaub, und/oder Gasen aus der Umgebungsluft ausgebildet. Sie weist zumindest ein Filterelement auf und ist in einem Außenbereich des Straßenfahrzeugs anordenbar. Die Umgebungsluftreinigungsvorrichtung ist dazu ausgebildet, an einem Fahrzeugheck mittels einer lösbaren Kupplung befestigt zu werden, wobei die Umgebungsluftreinigungsvorrichtung zumindest eine mit einer fahrzeugseitigen Kupplungskomponente korrespondierende Gegenkupplung aufweist.

Eine derartige Befestigung der Umgebungsluftreinigungsvorrichtung am Fahrzeugheck hat mehrere entscheidende Vorteile: Zunächst existiert mit einer fahrzeugseitigen Anhängerkupplungskomponente ein mechanisch sehr belastbares Element, ferner ist die Montage/Demontage aufgrund des lediglich einen Kraftangriffspunktes schnell und einfach, ferner besteht aufgrund des Abstandes des Kupplungskopfes von der Karosserie keine Gefahr, dass bei der Montage/Demontage die Karosserie beschädigt wird.

Der Begriff "Filterelement" ist so zu verstehen, dass dieses ein- oder mehrteilig ausgebildet sein kann und insbesondere mehrere Filtereinheiten, insbesondere Filterbälge und/oder Filtertaschen, aufweisen kann. Es können auch mehrere Subfilterelemente vorgesehen sein, die zu einem Filterelement verbunden werden.

Die Gegenkupplung der Umgebungsluftreinigungsvorrichtung weist eine Anhängerkupplung auf oder kann aus dieser bestehen. Insbesondere kann es sich bei der Anhängerkupplung um eine Gegenkupplung für eine fahrzeugseitige Kugelkupplung handeln, was im PKW-Bereich den Standard darstellt. In nicht erfindungsgemäßen Ausführungen kann die Gegenkupplung auch eine Heckklappenträgervorrichtung aufweisen, die insbesondere wenigstens ein Befestigungselement, insbesondere ein Hakenelement, ein magnetisches Gegenkupplungselement und/oder einen Saugnapf, aufweisen kann, das mit einer Fahrzeugtür bzw. -klappe, insbesondere einer Heckklappe, verbindbar ist. Solche Befestigungselemente sind aus dem Bereich der Heckträger, insbesondere Fahrradträger bekannt, und können aufgrund ihrer Befestigung an einer Heckklappe auch eingesetzt werden bei Fahrzeugen ohne fahrzeugseitige Anhängerkupplungskomponente. Diese sind im Prinzip genauso einfach und schnell montierbar wie ein System, das auf die Anhängerkupplung zugreift. Vorteilhaft kann eine Befestigung der Umgebungsluftreinigungsvorrichtung an der Heckklappe, beispielsweise mittels eines geeigneten Trägersystems derart erfolgen, dass sich diese mit angebauter Umgebungsluftreinigungsvorrichtung noch öffnen lässt. Ggf. sind in einem solchen Fall verstärkte Gasfedern und/oder eine (linear) antriebsunterstützte Öffnungsmechanik der Heckklappe von Vorteil.

Mittels des magnetischen Befestigungselements kann eine nicht erfindungsgemäße Umgebungsluftreinigungsvorrichtung an einer (ferro-)magnetischen Karosseriekomponente des Straßenfahrzeugs gehaltert werden. Eine magnetische Befestigung ist vorteilhaft besonders schnell möglich; dass auch größere Lasten sicher hierüber befestigt werden können, haben beispielsweise magnetische Skiträger gezeigt. Ferner kann das Befestigungselement zumindest einen Saugnapf aufweisen; auch Saugnäpfe eignen sich zur sicheren Befestigung einer erfindungsgemäßen Umgebungsluftreinigungsvorrichtung. Der Begriff "fahrzeugseitige Kupplungskomponente" ist gemäß der zuletzt genannten Ausführungsformen weit auszulegen; so fungiert bei einem magnetischen Gegenkupplungselement ein magnetischer Karosserieabschnitt als fahrzeugseitige Kupplungskomponente, während bei einem Saugnapf als Gegenkupplungselement ein beliebiger Oberflächenabschnitt der Karosserie, der eine hinreichend geringe Rauheit aufweist, als fahrzeugseitige Kupplungskomponente dienen kann.

Die vorbeschriebene Anordnung der Umgebungsluftreinigungsvorrichtung an einer Anhängerkupplung bietet den Vorteil, dass diese vom Endbenutzer mit wenigen Handgriffen an- und abgebaut werden kann, sie ist reversibel. Ist die Umgebungsluft aktuell nicht mit Feinstaub und/oder Schadgasen belastet und/oder für Fahrten in wenig belastete Regionen, Urlaubsfahrten etc. kann dieser die Umgebungsluftreinigungsvorrichtung einfach abkuppeln, während er die Umgebungsluftreinigungsvorrichtung für Fahrten in hochbelastete Ballungsräume und/oder Zonen mit Fahrverboten für Hochemissionsfahrzeuge einfach wahlweise wieder ankuppeln kann.

Es ist gemäß einer weiteren Ausführungsform möglich, dass die Umgebungsluftreinigungsvorrichtung zumindest ein Aufnahmegehäuse aufweist, in dem das zumindest eine Filterelement aufgenommen ist. Das Aufnahmegehäuse weist zumindest eine Eintrittsöffnung und eine Austrittsöffnung auf und ist insbesondere über die Gegenkupplung mit dem Straßenfahrzeug verbindbar. Das Aufnahmegehäuse kann beispielsweise einen kraftleitenden Rahmen, der die Betriebskräfte aufnimmt, sowie eine Abdeckhaube aufweisen, die auch separat lösbar ausgebildet sein kann, um das zumindest eine Filterelement möglichst einfach auswechseln zu können. Die Eintrittsöffnung(en) kann/können in einem Montagezustand in bestimmungsgemäßer Fahrtrichtung vorne und/oder seitlich, oben oder unten am Aufnahmegehäuse vorgesehen sein. Bei einer seitlichen Anordnung an einer oberen, unteren oder seitlichen Wand ist eine Anordnung der Eintrittsöffnung(en) im in Fahrtrichtung gesehen vorderen Bereich dieser Wandungen bevorzugt, um die Strömung mit geringem konstruktiven Aufwand innerhalb der Umgebungsluftreinigungsvorrichtung führen zu können. Die seitliche Anordnung ist insbesondere bei Montagepositionen von Vorteil, die nicht direkt im Fahrtwind stehen, wie eben hinter dem Fahrzeug. Ferner ist es möglich und sinnvoll, wenn die Umgebungsluftreinigungsvorrichtung zumindest zwei Filterelemente aufweist, die in Fahrzeugquerrichtung nebeneinander angeordnet sind, insbesondere mit einem vorbestimmten Abstand dazwischen.

Das Aufnahmegehäuse kann eine titandioxidhaltige Beschichtung auf seiner Außenseite aufweisen zur fotokatalytischen Oxidation von NO2 zu NO3.

Zwischen den Filterelementen kann auch ein Abstand vorgesehen sein, der beispielsweise zur Durchführung von Kabeln, Hydraulikleitungen und dergleichen dienen kann. Ferner kann es sinnvoll sein, zwei getrennte Filterelemente einzusetzen, da ein großes Filterelement, das sich über einen wesentlichen Teil der Fahrzeugbreite erstreckt, schwierig zu produzieren ist und zudem ein großes Gewicht aufweist, was den Austausch erschwert. Bei einer Ausführungsform mit zwei oder mehr getrennten Filterelementen kann zudem vorgesehen sein, dass jedes Filterelement ein eigenes Gehäuse aufweist.

Gemäß einer noch weiteren Ausführungsform kann die Umgebungsluftreinigungsvorrichtung zumindest ein Strömungsleitelement aufweisen, das bevorzugt an einer unteren, in Fahrzeugquerrichtung verlaufenden Kante der Umgebungsluftreinigungsvorrichtung, bevorzugt in Fahrtrichtung hinten, vorliegt. Über eine derartige Anordnung des Strömungsleitelements kann vorteilhaft erreicht werden, dass Emissionen von fahrzeuggebundenen Emissionsquellen wie Bremsen, Abgase und Reifenabrieb gezielt der Umgebungsluftreinigungsvorrichtung zugeführt werden. Selbstverständlich ist die Erfindung nicht auf eine Anordnung des Strömungsleitelements an der genannten Montageposition beschränkt, andere Montagepositionen wie etwa an einer vorderen, äußeren und in Fahrzeughochrichtung verlaufenden Seitenkante sind auch möglich. Durch das Strömungsleitelement kann vorteilhaft ein Staudruck vor dem Filterelement der Umgebungsluftreinigungsvorrichtung erhöht werden, sodass eine Anströmung durch die Fahrgeschwindigkeit in einem Montagezustand zur Durchströmung beitragen kann. Noch weiter kann vorgesehen sein, dass sowohl an den vorderen Seitenkanten (vertikal) der Umgebungsluftreinigungsvorrichtung als auch an der unteren Querkante (horizontal) solche Strömungsleitelemente angeordnet sind, wobei es besonders vorteilhaft ist, wenn sich das untere Strömungsleitelement möglichst nah bis zur Fahrbahnoberfläche erstreckt.

Alternativ oder zusätzlich kann/können Strömungsleitelement(e) an einer Flanke des Fahrzeugs, an dem die erfindungsgemäße Umgebungsluftreinigungsvorrichtung montiert ist, vorgesehen werden, etwa in einem zwischen Hinterachse und Vorderachse liegenden Längsbereich. Hierdurch kann ein Tunneleffekt der Unterströmung des Fahrzeugs erreicht werden. Die flankenseitigen Strömungsleitelemente können etwa auch als Verkleidungs-/Beplankungsteile bzw. als Teil eines seitlichen Unterfahrschutzes ausgeführt sein.

Bei dem Strömungsleitelement kann es sich etwa um eine Strömungsleitplatte handeln, die bevorzugt unter einem Winkel zur Fahrzeughoch-, Längs- oder Querachse verkippt angeordnet ist. Die Strömungsleitplatte kann beispielsweise als Strömungsleitblech oder Gummiformteil, -profil und/oder -lippe ausgebildet sein; andere Werkstoffe, insbesondere Kunststoffe, sind, eine hinreichende mechanische Belastbarkeit vorausgesetzt, selbstverständlich auch möglich. Optional kann auch eine Schaltbarkeit des Strömungsleitelements vorgesehen sein, wobei es sich um ein verstellbares Strömungsleitblech handeln kann, das zwischen verschiedenen Positionen verstellbar ist, um die Luftstromführung zu beeinflussen. Das Strömungsleitblech ist zwischen einer Außerfunktionsposition und einer Funktionsposition verstellbar, wobei in der Funktionsposition die Luftströmung zu dem Filterelement in der Feinstaub-Absaugvorrichtung geleitet wird. In der Außerfunktionsposition kann dagegen die Luftzufuhr zu dem Filterelement unterbunden sein.

Bevorzugt kann das mindestens eine Strömungsleitelement so ausgestaltet sein, dass im Fahrbetrieb der lokale Luftdruck im Einlassbereich der Umgebungsluftreinigungsvorrichtung erhöht und/oder im Auslassbereich gesenkt wird. Hierdurch kann die Abscheideleistung pro Fahrstrecke verbessert werden und passive Durchströmungsanteile (staudruckgetrieben) erreicht werden.

Gemäß einer vorteilhaften Weiterbildung kann vorgesehen sein, dass die Umgebungsluftreinigungsvorrichtung wenigstens einen in Fahrtrichtung gesehen dem zumindest einen Filterelement strömungsmäßig vorgeschalteten Vor- bzw. Grobabscheider, insbesondere ein Abscheidegitter, Abscheidenetz, Prallbleche und/oder ein Vorabscheidervlies aufweist. Es kann ferner beispielsweise vorgesehen sein, dass der Vor- bzw. Grobabscheider, insbesondere das Abscheidegitter, mit dem zumindest einen Strömungsleitelement verbunden ist. Der Grobabscheider, insbesondere das Abscheidegitter, ist dazu vorgesehen, zu verhindern, dass Fremdkörper in die Umgebungsluftreinigungsvorrichtung gelangen und das Filterelement schädigen. Das Abscheidegitter kann zu diesem Zweck grobmaschig ausgeführt sein und eine Maschenweite von 1 mm bis 4 mm, bevorzugt 6 mm bis 8 mm, aufweisen, sodass durch dieses nur ein vernachlässigbar kleiner zusätzlicher Druckverlust entsteht. Solche Gitter sind beispielsweise als Aluminiumstreckgitter äußerst kostengünstig verfügbar. In einer weiteren Ausführungsform kann jedoch auch vorgesehen sein, dass der Grobabscheider eine Filtrationsfunktion erfüllt und alternativ oder zusätzlich eine Vlieslage aufweist.

Ein Vorabscheidervlies kann insbesondere rohseitig auf dem Filterelement angeordnet werden, beispielsweise verklebt, oder in einem vorbestimmten Abstand zum Filterelement vorliegen, wobei eine Anordnung direkt auf dem Filterelement den Vorteil hat, dass das Vorabscheidervlies beim Service zusammen mit dem Filterelement gewechselt wird. Vorteilhafterweise hat das Vorabscheidervlies zudem wasserabscheidende und drainierende Eigenschaften und ist daher in der Lage, das Filterelement zusätzlich zu schützen.

Gemäß einer vorteilhaften Weiterbildung kann vorgesehen sein, dass die Umgebungsluftreinigungsvorrichtung dem zumindest einen Filterelement strömungsmäßig vorgeschaltet einen Wasserabscheider zur Abscheidung von Regen- und/oder Spritzwasser aufweist. Der Wasserabscheider kann bevorzugt einen Lamellenabscheider und/oder eine hydrophobe, insbesondere hydrophob imprägnierte, Abscheidelage und/oder insbesondere schließbare Klappen oder Lamellen aufweisen. Der Wasserabscheider kann insbesondere abhängig von einem Regensensorsignal und/oder Scheibenwischersignal zugeschaltet oder in den Strömungsweg gestellt werden. Im Falle von schließbaren Klappen oder Lamellen können diese abhängig von einem Regensensorsignal/Scheibenwischersignal verstellt werden. Der Wasserabscheider kann insbesondere dem Vor- bzw. Grobabscheider vor- oder nachgeschaltet vorliegen. Ein Scheibenwischersignal kann bei Kopplung der Umgebungsluftreinigungsvorrichtung mit dem Straßenfahrzeug problemlos aus einem Datenbus des Fahrzeugs extrahiert werden und beschreibt einen Betriebsparameter des Scheibenwischers (z. B. Ein/Aus, Wischgeschwindigkeit). Selbstverständlich kann ein Abgriff des Scheibenwischersignals auch anders erfolgen, beispielsweise rein elektrisch.

Gemäß einer vorteilhaften Weiterbildung kann vorgesehen sein, dass an der Umgebungsluftreinigungsvorrichtung eine Montageöffnung für das Filterelement vorgesehen ist, die insbesondere seitlich, vertikal oder in bestimmungsgemäßer Fahrtrichtung in einem Montagezustand hinten angeordnet ist. Hierbei ist bevorzugt, dass die Umgebungsluftreinigungsvorrichtung Haltemittel für das mindestens eine Filterelement umfasst, die formschlüssig eine Bewegung des Filterelementes in Fahrtrichtung unterbinden, um bei Bremsungen und Auffahrsituationen ein Auslösen des Filterelementes zu verhindern. Die Haltemittel sind bevorzugt so ausgestaltet, dass der Öffnungsquerschnitt innerhalb der Haltemittel kleiner ist als der Querschnitt des Filterelements quer zur Fahrtrichtung.

Gemäß einer weiteren vorteilhaften Weiterbildung kann vorgesehen sein, dass die Umgebungsluftreinigungsvorrichtung einen Schubladenmechanismus und/oder lösbare Rastverbindungen für die Montage des Filterelements in der Umgebungsluftreinigungsvorrichtung aufweist. So kann eine einfach wartbare Umgebungsluftreinigungsvorrichtung bereitgestellt werden.

Das Filterelement kann ein- oder mehrteilig ausgebildet sein und insbesondere mehrere Filtereinheiten, insbesondere Filterbälge und/oder Filtertaschen, aufweisen. Es können auch mehrere Subfilterelemente vorgesehen sein, die zu einem Filterelement verbunden werden.

In einer ersten Weiterbildung kann die Höhe des zumindest einen Filterelements in einem Bereich zwischen 100 mm und 600 mm, bevorzugt zwischen 150 mm und 500 mm, liegen.

Die Parameter, die den größten Einfluss auf die Abscheideleistung der Umgebungsluftreinigungsvorrichtung haben, sind die Höhe des Filterelements und der Durchströmungswiderstand des Filterelements, der wesentlich durch das Filterkonzept bestimmt wird, und nicht etwa die Eintrittsgeschwindigkeit. Es muss daher eine bestimmte Mindesthöhe eingehalten werden, um eine zufriedenstellende Abscheideleistung zu erreichen.

Gemäß einer weiteren Weiterbildung wird vorgeschlagen, das Filterelement mit einer Anströmfläche von zumindest 100 mm x 250 mm auszuführen, bevorzugt zumindest 150 mm x 500 mm. Alternativ oder zusätzlich kann vorgesehen sein, dass das Volumen des zumindest einen Filterelements zumindest 6,5 l beträgt, bevorzugt zumindest 15 l. Die Netto-Filterfläche des zumindest einen Filterelements soll zumindest 3 m², bevorzugt zumindest 7 m², am meisten bevorzugt zumindest 15 m², betragen. Bei Einsatz eines teil- oder vollsynthetischen Filtermediums anstelle eines cellulosebasierten können auch geringere Filterflächen ausreichend sein.

Das Filterelement kann alternativ oder zusätzlich mehrere Faltenstabilisierungsmittel aufweisen, die bei einer Ausführungsform mit gefaltetem Filterbalg diesen stützen und in einem lateralen Abstand von nicht mehr als 150 mm zueinander vorliegen. Eine Ausbildung des Filterelements als Faltenfilter wird aufgrund des im Vergleich zu anderen Bauformen geringen Druckverlusts bevorzugt.

Eine solche Abstützung des Filterbalgs durch Faltenstabilisierungsmittel trägt zweierlei Problemen Rechnung: Erstens erfährt das Filterelement aufgrund der Fahrgeschwindigkeit, auch im Heckbereich, einen hohen Staudruck und zweitens ist das Filterelement Nässeeinwirkungen ausgesetzt, dies nicht nur durch Niederschlag, sondern auch durch Einwirkungen beim Reinigen des Fahrzeugs, etwa durch einen Hochdruckreiniger.

Überraschenderweise lassen sich o. g Herausforderungen durch eine Abstützung der Falten des Filterbalgs durch Faltenstabilisierungsmittel in einem Maximalabstand von 150 mm elegant lösen, sodass das Filterelement sowohl eine Anströmung bei Vₘₐₓ (bei direkter Anströmung), z. B. 180 km/h, bevorzugt > 200 km/h, schadenfrei übersteht als auch, dass es externe Reinigungseinwirkungen durch Hochdruckreiniger nicht schädigen können. Ohne wirksame Faltenstabilisierungsmittel droht einem Filterelement mit klassischem Balgaufbau bei derartiger mechanischer Einwirkung ein Paketieren der Falten, d. h. ein Verschluss der Faltenzwischenräume, was zu einem schlagartigen Verlust an Filterfläche führt und somit unmittelbar zu einem korrespondierenden Anstieg des Durchströmungswiderstandes und somit entsprechenden Abfall des Volumenstroms.

Der erfindungsgemäße Bereich des lateralen Abstands der Faltenstabilisierungsmittel von nicht größer als 150 mm kann vorteilhafterweise nach unten hin derart begrenzt sein, dass der Abstand bevorzugt größer ist als 15 mm, bevorzugt größer als 30 mm, da ansonsten ein ungünstiges Verhältnis von durch die Faltenstabilisierungsmittel verdeckten Filterbalgbereichen und frei durchströmbaren Bereichen vorläge.

Vorteilhaft ermöglicht ein Filterelement mit derartigen Faltenstabilisierungsmitteln, dass eine damit ausgestattete Umgebungsluftreinigungsvorrichtung ggf. ohne separaten Spritzwasserschutz (Klappen, Rollläden o. Ä.) betrieben werden kann, da das Filterelement selbst eine so große Stabilität aufweist, dass eine Wasserschlageinwirkung nicht zu einer Beschädigung des Filterelements führt. Die Umgebungsluftreinigungsvorrichtung weist daher eine nur geringe Komplexität auf und kann überraschend kostengünstig bereitgestellt werden.

Es sind verschiedene Faltenstabilisierungsmittel möglich, die diese Funktion erfüllen.

In einer besonderen Ausführungsform kann vorgesehen sein, dass die Faltenstabilisierungsmittel jeweils parallel zueinander, bevorzugt in Faltenquerrichtung, verlaufen. Andere Winkelorientierungen sind selbstverständlich auch möglich, etwa diagonal. Es können auch zwei Gruppen von Faltenstabilisierungsmitteln vorgesehen sein, die jeweils parallel laufen und sich kreuzen. Ein paralleler Verlauf hat den Vorteil, dass sich dieser bei der Filterelementfertigung problemlos durch kontinuierliche Fertigungsprozesse realisieren lässt. Eine Anordnung der Faltenstabilisierungsmittel in Faltenquerrichtung ist zudem besonders vorteilhaft, da hierbei die kleinstmögliche Stützlänge zwischen zwei benachbarten Falten realisiert ist, was zu einer besonders wirksamen Faltenstützung führt.

In einer weiteren Ausführungsform kann vorgesehen sein, dass die Faltenstabilisierungsmittel zumindest auf einer Reinluftseite des Filterelements, bevorzugt zusätzlich auf einer Rohluftseite des Filterelements, vorliegen. Durch eine solche Anordnung zumindest auf der Reinseite wird zuverlässig verhindert, dass die Falten unter den o. g. mechanischen Belastungen kompaktieren. Eine Anordnung zusätzlich auf der Rohseite erhöht die Belastbarkeit weiter, wobei jedoch der größere Beitrag zur Filterelementsteifigkeit durch die reinseitigen Faltenstabilisierungsmittel geliefert wird.

Ferner kann vorgesehen sein, dass das Filtermedium eine Biegeeigensteifigkeit von zumindest 1 Nm², bevorzugt zumindest 2 Nm², aufweist. Gemeint ist hiermit eine intrinsische Biegesteifigkeit des Filtermediums, d. h. in einem unverarbeiteten/ungefalteten Zustand.

Gemäß einer noch weiteren Ausführungsform können die Faltenstabilisierungsmittel zumindest ein inneres Faltenstabilisierungsmittel umfassen, das in die Faltenzwischenräume zumindest teilweise eingreift, bevorzugt die Faltenzwischenräume ausfüllt. Bei dem inneren Faltenstabilisierungsmittel kann es sich beispielsweise um eine durchlaufende Kleberaupe und/oder einen eingreifenden Stabilisierungskamm handeln. Unter einer "durchlaufenden Kleberaupe" wird vorliegend eine Kleberaupe verstanden, die bereits vor dem Falten auf das flächige Filtermedium aufgebracht wird und somit nach dem Falten komplett von Faltengrund zur Faltenspitze verläuft, d. h. eben durchlaufend ausgebildet ist. Alternativ oder zusätzlich hierzu kann zumindest ein äußeres Faltenstabilisierungsmittel vorgesehen sein, das zumindest mit jeweils benachbarten Faltenspitzen verbunden ist. Das äußere Faltenstabilisierungsmittel kann zumindest eine zumindest mit den Faltenspitzen verbundene Kleberaupe, zumindest einen zumindest mit den Faltenspitzen verbundenen Faden und/oder zumindest ein Stabilisierungsband bzw. -rippe und/oder zumindest ein Stützgitter aufweisen. Die äußeren Faltenstabilisierungsmittel können ferner stoffschlüssig mit den Faltenspitzen verbunden sein, was zu einer optimalen Krafteinleitung von den Faltenspitzen in die äußeren Faltenstabilisierungsmittel beiträgt. Eine derartige stoffschlüssige Verbindung kann beispielsweise durch Verschweißen des äußeren Faltenstabilisierungsmittels mit dem Filterbalg, insbesondere den Faltenspitzen, erfolgen, insbesondere durch Spiegelschweißen. Im Gegensatz zu den inneren Faltenstabilisierungsmitteln handelt es sich bei der Kleberaupe der äußeren Faltenstabilisierungsmittel nicht um eine durchlaufende Kleberaupe, sondern um eine oberflächlich mit den Faltenspitzen verbundene.

Die Kleberaupen der inneren und/oder äußeren Faltenstabilisierungsmittel können eine Breite in einem Bereich von 0,5 mm bis 12 mm, bevorzugt 1 mm bis 8 mm, aufweisen. In einer besonderen Ausführungsform sind die Falten des Filterbalgs "auf Block gefaltet", sodass der Faltenabstand in etwa der doppelten Breite der durchlaufenden Kleberaupen (als innere Faltenstabilisierungsmittel) entspricht. Als Material für die Kleberaupen kommt etwa ein Schmelzkleber in Betracht.

Alternativ oder zusätzlich kann das Filtermedium des Filterelements der Umgebungsluftreinigungsvorrichtung eine oder mehrere Prägelinien aufweisen, die bevorzugt in Faltenquerrichtung verlaufen. Durch derartige Prägelinien wird die Steifigkeit der Falten des Filterbalgs durch eine Erhöhung des Flächenträgheitsmoments zusätzlich erhöht, was zusätzlich dazu beiträgt, ein Kollabieren/Kompaktieren der Falten unter Druckeinwirkung zu verhindern.

In einer besonders bevorzugten Ausführungsform kann vorgesehen sein, dass das Filterelement der Umgebungsluftreinigungsvorrichtung eine Kollapsdruckfestigkeit von zumindest 15 mbar, bevorzugt zumindest 25 mbar, aufweist.

Das zumindest eine Filterelement kann ein ein- oder mehrlagiges Filtermedium aufweisen, das zumindest eine Partikelfilterlage, insbesondere eine Celluloselage und/oder eine Kunstfaserlage, insbesondere ein Kunstfaservlies, und/oder zumindest eine Gasfiltrationslage, insbesondere mit einer Aktivkohleschüttung als Aktivmaterial, hat. Die Gasfiltrationslage kann mit entsprechenden Aktivmaterialien versehen sein, die eine Ad-/Absorption verschiedener gesundheitsschädlicher Gase aus der Umgebungsluft ermöglichen, beispielsweise Ozon, Schwefeldioxid, Stickoxide und Kohlenstoffmonoxid. Hierzu können auch verschiedene Aktivmaterialien zum Einsatz kommen. Die Aktivkohle kann auch imprägniert sein, um die Abscheidung bestimmter Gase zu verbessern; beispielsweise unter Verwendung von Kupfer oder Kupferverbindungen, um die Absorption von NOₓ zu erhöhen. Durch Einsatz einer derartigen Aktivkohleschüttung kann die Absorptionsleistung des/der eingesetzten Filterelement(e) so eingestellt werden, dass die Umgebungsluftreinigungsvorrichtung in etwa so viel NOₓ absorbiert, wie das Straßenfahrzeug, an dem sie montiert ist, emittiert. Es kann bevorzugt katalytische Aktivkohle verwendet werden, die beispielsweise zur Umwandlung von Stickoxid in weniger schädliche Stoffe, wie beispielsweise Stickstoff und Kohlendioxid, verwendbar ist.

Die Umgebungsluftreinigungsvorrichtung sollte einen Druckverlust bei einer Anströmung mit Luft bei Normbedingungen mit 1,5 m/s von höchstens 200 Pa, bevorzugt bei 2,5 m/s von höchstens 250 Pa, aufweisen.

Ferner kann das zumindest eine Filterelement ein gefaltetes Filterelement sein, das dazu ausgebildet sein kann, so verbaut zu werden, dass seine Falten in Fahrzeuglängsrichtung oder Fahrzeughochrichtung verlaufen. Die konkrete Faltenorientierung hängt jedoch von der Durchströmungsrichtung ab. Bei einer Durchströmung im Montagezustand in Fahrzeughochrichtung ist eine Faltenorientierung entlang der Fahrzeughochrichtung entsprechend vorteilhaft, da hierdurch die Faltentaschen optimal angeströmt werden können.

Die Faltenhöhen des Filterelements betragen vorteilhaft zumindest 100 mm, besonders vorteilhaft über 200 mm; hierüber kann in einem kompakten Bauraum eine vergleichsweise große Filterfläche untergebracht werden. Alternativ kann es sich bei dem Filterelement um ein sogenanntes Kompaktelement handeln. Unter "Kompaktelement" wird ein Filterelement verstanden, das einen Filtermediumkörper aufweist, der aus abwechselnd aufgewickelten Well- und Flachlagen aus Filtermedium besteht, wobei diese untereinander flächig verklebt sind. Die durch die Welllagen gebildeten Strömungskanäle sind wechselseitig stirnseitig verschlossen, etwa durch einen Klebstoffpfropf.

Ferner kann vorgesehen sein, dass es sich bei dem Filterelement um ein Taschenfilterelement handelt, das zumindest drei Filtertaschen, bevorzugt vier oder mehr Filtertaschen, aufweist. Alternativ oder zusätzlich kann auch ein V-Filter-Element eingesetzt werden, das wenigstens drei V-förmige Filtereinheiten aufweist. Solche Filterelementtypen sind im Bereich der Ansaugfilter für Gasturbinen und/oder HVAC-Systeme am Markt in vielen Größenbereichen verfügbar.

Alternativ oder zusätzlich kann es sich bei dem Filterelement um ein Filterelement handeln, das zumindest der Partikelfilterklasse M6 nach DIN EN 779 entspricht.

Ferner kann vorgesehen sein, dass das Filterelement eine variable Faltenhöhe aufweist, bevorzugt eine über eine Fahrzeughochachse oder in Fahrtrichtung gesehen variable Faltenhöhe. Hierüber kann etwa eine Anpassung der Außenkontur des Filterelements an einen Bauraum am Fahrzeugheck erreicht werden und/oder eine an die Fahrzeugumströmung im Nachlaufbereich angepasste Form erreicht werden.

In einer Ausgestaltung umfasst die Umgebungsluftreinigungsvorrichtung zumindest eine Luftfördereinrichtung zur Unterstützung der Durchströmung, insbesondere zur geregelten Unterstützung der Durchströmung, beispielsweise, aber nicht hierauf beschränkt, im Stand eines Fahrzeugs oder bei geringen Fahrgeschwindigkeiten, insbesondere abhängig von der Fahrgeschwindigkeit. Die Luftfördereinrichtung weist insbesondere ein elektrisches Anschlusselement auf, das mit einer Stromversorgung eines Straßenfahrzeugs verbindbar ist. Bei der Stromversorgung des Straßenfahrzeugs kann es sich beispielsweise um eine Anhängersteckdose handeln; bei dem elektrischen Anschlusselement um einen hiermit korrespondierenden Stecker.

Alternativ oder zusätzlich kann es sich bei der Stromversorgung auch um eine Photovoltaikstromquelle handeln, die auf der Umgebungsluftreinigungsvorrichtung angeordnet sein kann, und/oder eine vom Fahrtwind antreibbare Windturbine.

Bei der Luftfördereinrichtung kann es sich um einen Axialventilator oder ein Axialgebläse handeln. Die Luftfördereinrichtung kann insbesondere einen elektrischen Antrieb aufweisen, der elektrisch mit einem Bordnetz des Straßenfahrzeugs verbindbar ist. Über die Anhängersteckdose kann hierbei eine hinreichend große elektrische Leistung zum Antrieb der zumindest einen Luftfördereinrichtung abgegriffen werden; beispielsweise kann die Luftfördereinrichtung eine elektrische Leistung von 120 W aufweisen. Axialgebläse oder -ventilatoren werden aufgrund ihrer vorteilhafterweise in Axialrichtung gesehen geringen Montagemaße bevorzugt eingesetzt; die Erfindung ist jedoch nicht hierauf beschränkt; radial oder diagonal arbeitende Strömungsmaschinen sind von dieser ebenso umfasst. Die Erfindung erfasst ausdrücklich sowohl passiv durchströmte Umgebungsluftreinigungsvorrichtungen als auch aktiv durchströmte Umgebungsluftreinigungsvorrichtungen mit zumindest einer Luftfördereinrichtung.

Die erfindungsgemäße Umgebungsluftreinigungsvorrichtung funktioniert in einer Ausführungsform nach dem Prinzip der passiven Durchströmung durch den durch die Fahrgeschwindigkeit erzeugten Staudruck. Da das Problem der exzessiven Luftverschmutzung in erster Linie in Ballungszentren existiert, in denen die Fahrgeschwindigkeit üblicherweise unter 40 km/h liegt, sollte der Druckverlust der Umgebungsluftreinigungsvorrichtung so gering sein, dass diese bei den üblichen bei innerstädtischen Geschwindigkeiten auftretenden Staudrücken noch durchströmt wird. So beträgt der Staudruck bei einer Fahrgeschwindigkeit von 30 km/h etwa 40 Pa und bei 40 km/h etwa 75 Pa.

Ein weiterer Aspekt der Erfindung betrifft ein Straßenfahrzeug, insbesondere einen Personenkraftwagen oder Lastkraftwagen, insbesondere leichten Lastkraftwagen, insbesondere angetrieben mit einer Brennkraftmaschine und/oder Elektroantrieb. Das Straßenfahrzeug weist eine erfindungsgemäße Umgebungsluftreinigungsvorrichtung auf, die insbesondere zur Entfernung von Stäuben, insbesondere Feinstaub, und/oder Gasen aus der Umgebungsluft ausgebildet ist, wobei die Umgebungsluftreinigungsvorrichtung zumindest ein Filterelement aufweist und in einem Außenbereich des Straßenfahrzeugs angeordnet ist. Die Umgebungsluftreinigungsvorrichtung ist an einem Fahrzeugheck mittels einer lösbaren Kupplung befestigt, wobei das Straßenfahrzeug eine fahrzeugseitige Kupplungskomponente aufweist, die mit der korrespondierenden Gegenkupplung der Umgebungsluftreinigungsvorrichtung lösbar verbunden ist.

Bei dem Straßenfahrzeug kann es sich beispielsweise um einen PKW oder Bus oder Lastkraftwagen mit oder ohne einem Fahrzeugrahmen handeln.

Die in Zusammenhang mit der erfindungsgemäßen Umgebungsluftreinigungsvorrichtung offenbarten Merkmale können in beliebiger Kombination auch mit dem erfindungsgemäßen Straßenfahrzeug kombiniert werden und umgekehrt.

Die Vorteile einer derartigen Anordnung wurden bereits im Zusammenhang mit der erfindungsgemäßen Umgebungsluftreinigungsvorrichtung beschrieben.

Bei der fahrzeugseitigen Kupplungskomponente handelt es sich um eine Anhängerkupplung, insbesondere eine Kugelkupplung wie sie bei PKW üblich ist. Eine Anhängerkupplung ist starr mit einer Karosserie bzw. einem Rahmen des Straßenfahrzeugs verbunden und eignet sich daher besonders gut, um auch größere Lasten, wie etwa durch das Eigengewicht der Umgebungsluftreinigungsvorrichtung sowie strömungsdynamische Lasten aufzunehmen, während eine An-/Abkoppelbarkeit mit wenigen Handgriffen möglich und auch für den technischen Laien problemlos durchführbar ist.

Als Nebeneffekt wirkt die Umgebungsluftreinigungsvorrichtung bei einer Anordnung im Heckbereich, d. h. hinter der Hinterachse eines Fahrzeugs, auch steinschlagvermindernd und trägt so zur Sicherheit nachfolgender Fahrzeuge bei. Aufgrund der sehr einfachen Konstruktionsweise und sowohl einfachen als auch schnellen Montage der erfindungsgemäßen Umgebungsluftreinigungsvorrichtung können auch bestehende Fahrzeugflotten problemlos damit nachgerüstet werden.

Die erfindungsgemäße Anordnung der Umgebungsluftreinigungsvorrichtung am Heck weist den Vorteil auf, dass der Strömungswiderstand des Fahrzeugs nur geringfügig erhöht wird, während Aufbauten und/oder Anbauten wie aus dem Stand der Technik bekannt eine deutliche Verschlechterung der Umströmung des Fahrzeugs mit sich bringen. Dass die Beeinflussung eher gering ist, ist von Heck-Fahrradträgern bzw. Wildträgern bekannt, die lediglich eine Strömungsbeeinflussung im Nachlaufbereich bewirken und daher deutlich geringere strömungsdynamische Auswirkungen haben als Dachträger.

Gemäß einer weiteren Ausführungsform ist das zumindest eine Filterelement der Umgebungsluftreinigungsvorrichtung in Fahrzeuglängsrichtung und/oder zumindest teilweise senkrecht zu dieser durchströmbar, insbesondere in Fahrzeughochrichtung von unten nach oben. Alternativ oder zusätzlich kann die Durchströmung der Umgebungsluftreinigungsvorrichtung als Ganzes zumindest teilweise, bevorzugt vollständig in Fahrzeughochrichtung erfolgen.

Eine Durchströmung von unten nach oben hat den Vorteil, dass die Umgebungsluft aus dem Bodenbereich angesaugt werden kann, die, verglichen mit darüber liegenden Luftschichten, in der Regel deutlich stärker mit Schadstoffen, insbesondere Feinstaub, belastet ist. Diesen Zusammenhang charakterisiert der so genannte Wakefaktor; hierbei handelt es sich um einen Umrechnungsfaktor, der aus einem Vergleich von Luftqualitätsmessungen an stationären Messstationen mit fahrzeugnahen Messungen im Bodenbereich gewonnen wurde. Demgemäß ist die Belastung im fahrzeugnahen Bodenbereich ca. um den Faktor 2 höher als die Messwerte der stationären Messstationen.

Es ist daher bevorzugt, die Umgebungsluftreinigungsvorrichtung bzw. deren Lufteinlass in möglichst geringer Höhe anzuordnen. Damit kann die absolut pro gefahrener Strecke abgeschiedene Partikelmenge erhöht werden.

Ferner ist es bevorzugt, die Umgebungsluftreinigungsvorrichtung außerhalb der Karosserie des Fahrzeugs anzuordnen. Die Form eines Fahrzeugs ist regelmäßig dafür ausgelegt, die Strömung bestmöglich um das Fahrzeug herumzuführen. Eine Anordnung der Umgebungsluftreinigungsvorrichtung außerhalb der Karosserie kann daher zur Optimierung der durch die Umgebungsluftreinigungsvorrichtung führbaren Luftmenge beitragen, insbesondere wenn die Umgebungsluftreinigungsvorrichtung bzw. Strömungsleitmittel wie bevorzugt so ausgestaltet sind, dass ein Teil der um das Fahrzeug strömenden Luft gezielt zu der Umgebungsluftreinigungsvorrichtung gelenkt wird.

Bevorzugt ist in Fahrtrichtung hinter der Umgebungsluftreinigungsvorrichtung eine freie Abströmzone vorgesehen. Alternativ zur Durchströmungsrichtung "in Fahrzeuglängsrichtung" kann die Durchströmung, wenn das Fahrzeug auf einer horizontalen Unterlage steht, auch als "horizontal" bezeichnet werden. Bei einer günstigen Anordnung von Ein- und Auslassöffnung für die zu reinigende Luft und einer entsprechenden Leitung der zu reinigenden Luft innerhalb der Umgebungsluftreinigungsvorrichtung ist selbstverständlich auch eine Strömungsführung innerhalb der Umgebungsluftreinigungsvorrichtung zumindest teilweise senkrecht zur Fahrtrichtung möglich.

"Freie Abströmzone" bedeutet, dass in Durchströmungsrichtung hinter dem Filterelement der Umgebungsluftreinigungsvorrichtung keine die Strömung störenden Einbauten vorliegen, da die, gemäß einigen Ausführungsformen, rein passive Durchströmung ansonsten durch den erhöhten Druckverlust gestört werden könnte.

Ferner kann sich die Umgebungsluftreinigungsvorrichtung über einen wesentlichen Teil einer Fahrzeugbreite im Fahrzeugheck erstrecken. Bevorzugt erstreckt sich die Umgebungsluftreinigungsvorrichtung über zumindest 30 % der Fahrzeugbreite, stärker bevorzugt über zumindest 40 %. Bevorzugt ist eine Ausbildung derart, dass sich die Umgebungsluftreinigungsvorrichtung zumindest über eine Breite, die dem Abstand zwischen zwei Rädern einer Fahrzeugachse entspricht, erstreckt.

Es kann ferner vorgesehen sein, dass die Umgebungsluftreinigungsvorrichtung zumindest eine Rückbeleuchtungseinrichtung aufweist, insbesondere alle für den öffentlichen Straßenverkehr zulassungsrechtlich im Heckbereich vorzusehenden Beleuchtungseinrichtungen (Bremslicht, Blinklicht etc.), sodass die in einem Heckbereich des Straßenfahrzeugs vorhandenen Rückbeleuchtungseinrichtungen bei zumindest teilweisem Verdecken repliziert werden. Zur Strom- und Signalversorgung dieser Beleuchtungseinrichtungen kann vorteilhafterweise eine im Heckbereich des Straßenfahrzeugs vorhandene Anhängersteckdose verwendet werden.

Um einen Eindruck von der hervorragenden Wirksamkeit eines solchen erfindungsgemäßen Fahrzeugs mit Umgebungsluftreinigungsvorrichtung zu bekommen, wurden Strömungssimulationen unter folgenden Randbedingungen durchgeführt:
- Partikelkonzentration in der Testluft mit 25 µg/m³ PM2,5, 50 µg/m³ PM10,
- Höhe des Filterelements 300 mm,
- Breite des Filterelements 600 mm,
- Abscheidegrad für PM2,5 und PM10 80 %, cellulosebasiertes Filtermedium, Dicke des Filtermediums 0,7 mm, Luftdurchlässigkeit 700 l/m²s mit 9 m² effektiver Filterfläche.

Basierend auf diesen Annahmen ergibt sich, dass ein solches Filterelement bei passiver Durchströmung mehr PM10-Partikel abscheidet, als der Dieselmotor erzeugt. Dabei wurde eine PM10-Emission von 6 mg/km angenommen. Somit lassen sich die Emissionen auf den Wert eines Elektrofahrzeugs reduzieren. Durch Einbau aktiver Komponenten, wie beispielsweise Lüfter, lässt sich die Abscheideleistung bei niedrigen Geschwindigkeiten noch verbessern.

### Kurze Beschreibung der Zeichnungen

Weitere Vorteile und zweckmäßige Ausführungen sind den weiteren Ansprüchen, der Figurenbeschreibung und den Zeichnungen zu entnehmen.

Es zeigen:
- Fig. 1: in schematischer Darstellung ein erfindungsgemäßes Straßenfahrzeug in Seitenansicht;
- Fig. 2: in schematischer Darstellung eine erste Ausführungsform einer Umgebungsluftreinigungsvorrichtung bevorzugt für das Straßenfahrzeug in Fig. 1;
- Fig. 3: in schematischer Darstellung eine zweite Ausführungsform einer Umgebungsluftreinigungsvorrichtung bevorzugt für das Straßenfahrzeug in Fig. 1;
- Fig. 4 und 5: eine schematische Darstellung eines anströmseitigen Bereichs der Umgebungsluftreinigungsvorrichtung;
- Fig. 6: eine isometrische Darstellung einer Modifikation für eine erfindungsgemäße Umgebungsluftreinigungsvorrichtung;
- Fig. 7: eine isometrische Darstellung einer weiteren Modifikation für eine erfindungsgemäße Umgebungsluftreinigungsvorrichtung;
- Fig. 8: eine isometrische Darstellung eines Taschenfilters, wie er in der erfindungsgemäßen Umgebungsluftreinigungsvorrichtung einsetzbar ist; und
- Fig. 9: eine isometrische Darstellung eines V-Filters, wie er in der erfindungsgemäßen Umgebungsluftreinigungsvorrichtung einsetzbar ist.

### Ausführungsform(en) der Erfindung

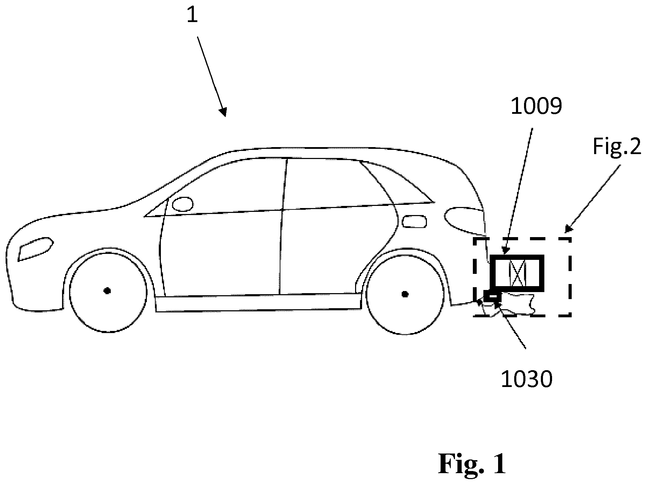

Fig. 1 zeigt in schematischer Darstellung ein erfindungsgemäßes Straßenfahrzeug in Seitenansicht, bei welchem die Umgebungsluftreinigungsvorrichtung 1009 im Heckbereich des Straßenfahrzeugs 1 mittels einer lösbaren Kupplung 1030 befestigt ist, wobei eine Anhängerkupplung 1031, etwa eine Kugelkupplung, des Straßenfahrzeugs 1 verwendet wird, an welcher die Umgebungsluftreinigungsvorrichtung 1009 mittels einer von dieser umfassten Gegenkupplung 1032 bevorzugt starr befestigt ist. Bei der Gegenkupplung 1032 der Umgebungsluftreinigungsvorrichtung 1009, die an der Anhängerkupplung 1031 des Straßenfahrzeugs befestigt ist, kann es sich vorteilhafterweise um eine kraftschlüssig den Kugelkopf umgreifende Vorrichtung handeln, über die sowohl das Eigengewicht der Umgebungsluftreinigungsvorrichtung als auch strömungsdynamische Krafteinwirkungen problemlos aufgenommen werden können. Selbstverständlich kann die Gegenkupplung 1032 auch auf eine andere Art an der Anhängerkupplung 1031 abgestimmt werden und/oder zusätzliche Streben, beispielsweise zur Momentenabstützung, haben.

Die vorbeschriebene Anordnung der Umgebungsluftreinigungsvorrichtung 1009 an einer Anhängerkupplung 1031 bietet den Vorteil, dass diese vom Endbenutzer mit wenigen Handgriffen an- und abgebaut werden kann. Ist die Umgebungsluft aktuell nicht mit Feinstaub und/oder Schadgasen belastet und/oder für Fahrten in wenig belastete Regionen, Urlaubsfahrten etc. kann dieser die Umgebungsluftreinigungsvorrichtung 1009 einfach abkuppeln, während er die Umgebungsluftreinigungsvorrichtung 1009 für Fahrten in hochbelastete Ballungsräume und/oder Zonen mit Fahrverboten für Hochemissionsfahrzeuge einfach wahlweise wieder ankuppeln kann.

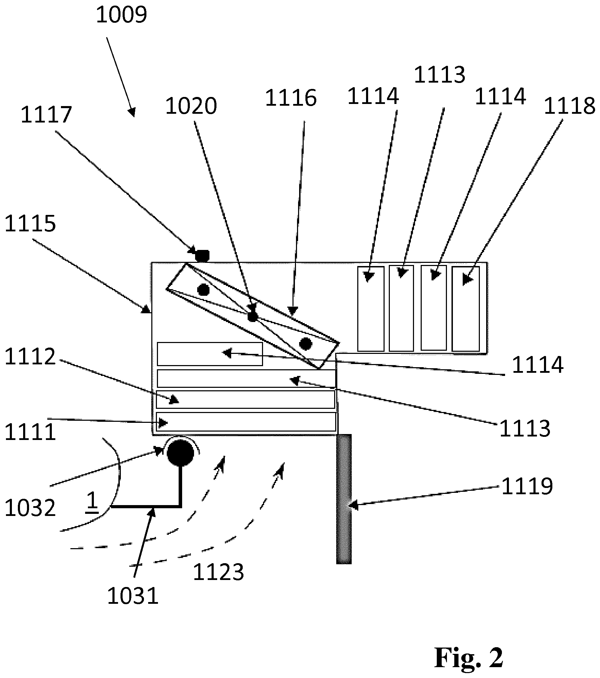

Fig. 2 zeigt in Detailansicht einen Ausschnitt der Fig. 1, mit einer schematischen Darstellung einer Ausführungsform einer Umgebungsluftreinigungsvorrichtung 1009. Die Umgebungsluftreinigungsvorrichtung 1009 kann wie gezeigt L-förmig ausgebildet sein, mit einem ersten vertikalen Schenkel, der von der eintretenden Strömung, deren Richtung 1123 schematisch gezeigt ist, von unten nach oben durchströmbar ist, und einem daran anschließenden, vom Straßenfahrzeug horizontal wegragenden zweiten Schenkel. Im ersten Schenkel sind von unten nach oben nacheinander durchströmbar jeweils optional anordenbar ein Einlass 1111, der beispielsweise Mittel zum Verhindern des Eindringens von Tieren wie Nagern, Vögeln o. Ä., wie beispielsweise ein Gitter, umfasst; eine weitere Schutzstufe 1112, die beispielsweise einen Steinschlagschutz oder einen Wasserabscheider, beispielsweise umfassend Gitter, schräg stehende oder stellbare Prall- oder Leitbleche oder -klappen; mindestens ein Gebläse 1113 zur Unterstützung der Strömung insbesondere bei geringen Fahrgeschwindigkeiten, welches bevorzugt fahrgeschwindigkeitsabhängig regelbar ist, insbesondere derart, dass die Drehzahl mit zunehmender Fahrgeschwindigkeit abnimmt; mindestens ein Leitwerk 1114 zum Leiten der Strömung innerhalb des L-förmigen Gehäuses; ein wie gezeigt bevorzugt schräg gestelltes Filterelement 1116 zur Separation von Partikeln wie Feinstaub; einen Feuchtigkeitssensor 1117, insbesondere zum Steuern eines beweglichen Wasserabscheiders abhängig vom Sensorsignal; einen Auslass 1118, der beispielsweise Mittel zum Verhindern des Eindringens von Tieren wie Nagern, Vögeln o. Ä., wie beispielsweise ein Gitter, umfasst. Um eine bessere Nutzung der unter dem Fahrzeugboden hervortretenden Strömung zu erzielen, kann eine anströmseitige Leitschaufel bzw. ein Strömungsleitelement 1119 am Einlass 1111, insbesondere an dessen fahrzeugabgewandter Seite, angeordnet sein. Die Umgebungsluftreinigungsvorrichtung 1009 kann mindestens einen weiteren Sensor 1020 in ihrem Inneren umfassen, welcher bevorzugt am Filterelement 1116 angeordnet oder von diesem umfasst ist und beispielsweise Feuchte, Partikel- oder Schadgaskonzentration, Druck oder Druckverlust messen und an eine Auswertungseinheit melden kann.

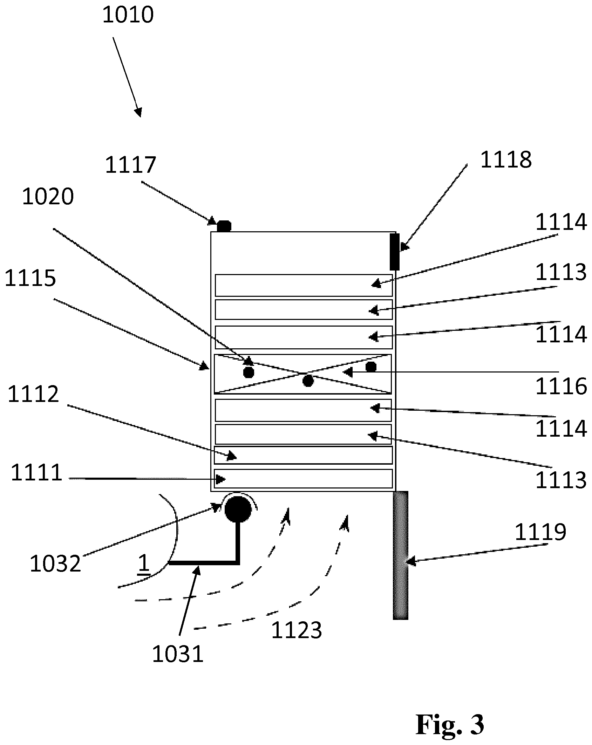

Fig. 3 zeigt in Detailansicht eine zweite, zu der aus Fig. 2 alternative Ausführungsform einer Umgebungsluftreinigungsvorrichtung 1010 und unterscheidet sich von dieser im Wesentlichen dadurch, dass die Umgebungsluftreinigungsvorrichtung 1010 keine L-förmige Ausgestaltung aufweist, sondern im Wesentlichen quaderförmig ausgebildet ist und bevorzugt von unten nach oben durchströmbar ist. Gleiche Merkmale sind mit gleichen Bezugszeichen versehen. Der Auslass 1118 ist in dieser Ausführungsform bevorzugt auf der dem Fahrzeug abgewandten Stirnseite des Gehäuses 1115, weiter bevorzugt wie gezeigt in deren oberen Bereich angeordnet. Eine Durchströmung von unten nach oben hat den entscheidenden Vorteil, dass der Feinstaub dort angesaugt wird, wo die größte Konzentration vorhanden ist, nämlich im bodennahen Bereich.

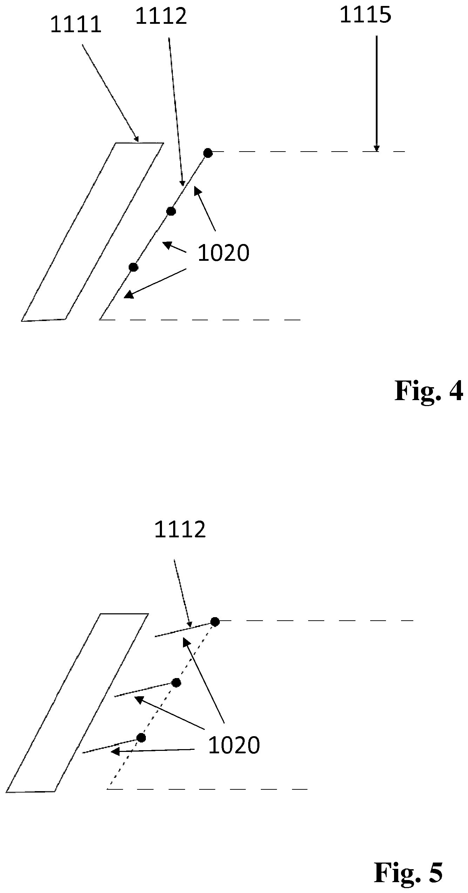

Fig. 4 und 5 zeigen eine schematische Darstellung einer möglichen Ausgestaltung eines anströmseitigen Bereichs einer erfindungsgemäßen Umgebungsluftreinigungsvorrichtung 1009,1010. Als Schutzstufe 1112 sind hier bevorzugt eine oder mehrere motorisch betätigte Mittel zum Verhindern des Eindringens von Tieren wie Nagern, Vögeln o. Ä., wie beispielsweise ein Gitter, umfasst.

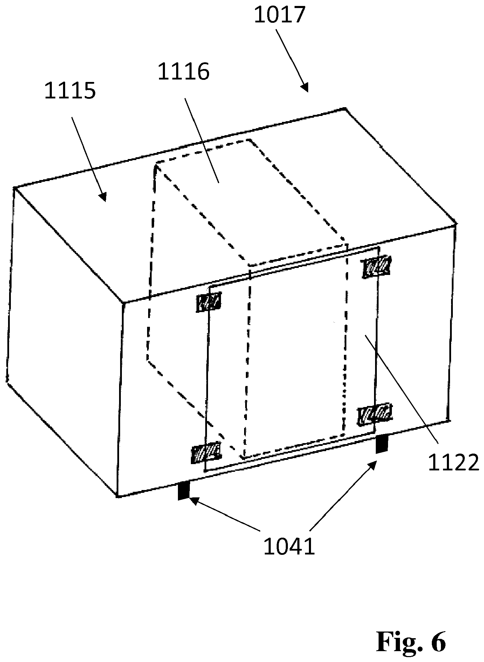

Fig. 6 zeigt eine isometrische Darstellung einer Modifikation 1017 für eine erfindungsgemäße Umgebungsluftreinigungsvorrichtung 1009,1010,1017,1018. Gemäß dieser Modifikation umfasst das Gehäuse 1115 eine Wartungsöffnung mit einer verschließbaren Wartungsklappe 1122, die einen Wechsel des Filterelements 1116 erlaubt. Bei Umgebungsluftreinigungsvorrichtungen, die von vorne, unten oder oben angeströmt werden, ist eine Anordnung der Wartungsklappe 1122 an einer in Fahrtrichtung seitlichen Wand des Gehäuses 1115 möglich und für die Wartung vorteilhaft, beispielsweise bei der Ausführungsform der Fig. 3. Bei der Fig. 2 gezeigten Ausführungsform ist eine Anordnung der Wartungsklappe 1122 an einer oberen, der Fahrbahn abgewandten Wand des Gehäuses 1115 denkbar oder vorteilhaft. Ferner ist eine Anordnung der Wartungsklappe 1122 an einer vorderen, in Fahrtrichtung weisenden Wand des Gehäuses 1115 denkbar oder vorteilhaft. Bei der in Fig. 3 gezeigten Ausführungsform ist eine Anordnung der Wartungsklappe 1122 ferner an einer hinteren, entgegen der Fahrtrichtung weisenden Wand des Gehäuses 1115 denkbar oder vorteilhaft.

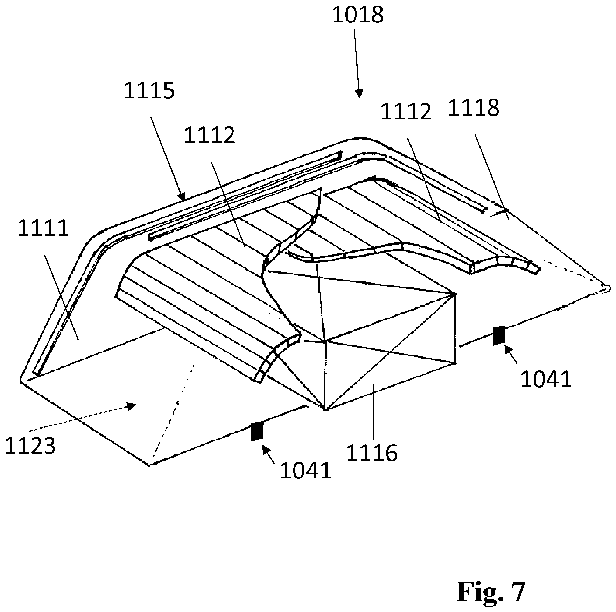

Fig. 7 zeigt eine isometrische Darstellung einer weiteren Modifikation 1018 für eine erfindungsgemäße Umgebungsluftreinigungsvorrichtung 1009,1010,1017,1018. Hierbei ist als Schutzstufe 1112 ein anströmseitiger erster motorisch beweglicher Rollladen 1124 und/oder ein zweiter motorisch beweglicher Rollladen 1125 im Gehäuse 1115 angeordnet, welche Einlass 1111 bzw. Auslass 1118 verschließen können. Wie bei den vorgenannten Klappen ist die Steuerung dieser Rollläden bzw. Klappen bevorzugt so ausgelegt, dass die Rollläden oder Klappen bei abgestelltem Fahrzeug und/oder ab einer vorbestimmten Strömungsgeschwindigkeit (Fahrgeschwindigkeit) wie beispielsweise 100 km/h und/oder bei Regen, Schnee oder sonstigem temporären Wassereintrag (wie in der Waschstraße, beim Betätigen der Scheibenwaschanlage o. ä.) geschlossen sind oder werden. Eine funktionale Verbindung mit der in Bezug auf Fig. 6 gezeigten Modifikation ist derart denkbar, dass die Wartungsklappe 1122 nur öffenbar ist, wenn die Klappen oder Rollläden offen sind, wobei die Klappen oder Rollläden (d. h. verallgemeinert der Einlass 1111 und der Auslass 1118) jeweils geschlossen sind, wenn das Fahrzeug nicht in Betrieb ist, und geöffnet sind, wenn das Fahrzeug in Betrieb ist. Selbstverständlich sind die genannten Funktionen auch unabhängig voneinander vom Betriebszustand des Fahrzeugs abhängig steuerbar.

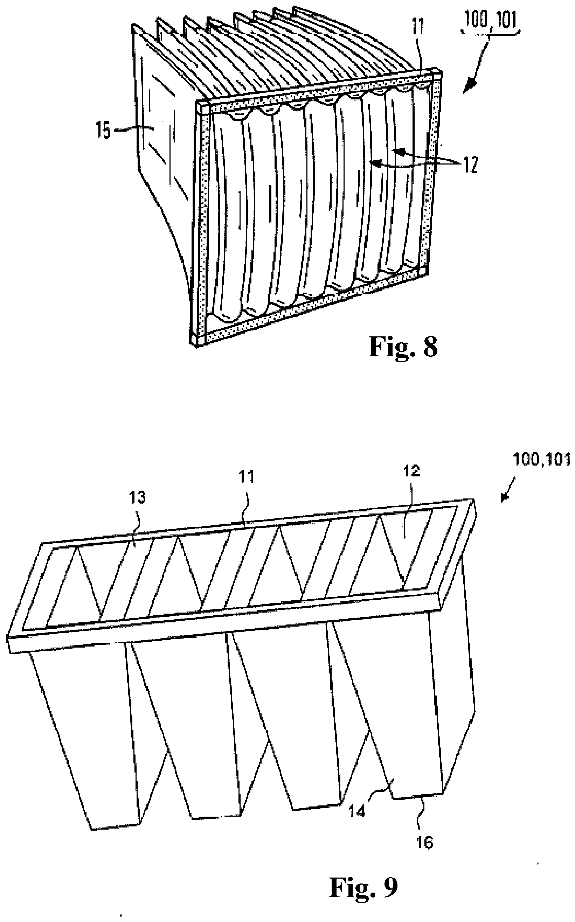

In Fig. 8 ist schematisch ein Taschenfilterelement 100,101 gezeigt, wie es in der erfindungsgemäßen Umgebungsluftreinigungsvorrichtung 1009,1010,1017,1018 eingesetzt werden kann. Das Taschenfilterelement 100,101 hat einen umlaufenden rechteckigen Rahmen 11, an dem eine Mehrzahl, hier acht, Filtertaschen 15 befestigt ist. Die Filtertaschen 15 bestehen aus einem geeigneten Filtermedium und werden durch Vernähen aus dem Filtermedium gebildet. Geeigneterweise ist das Taschenfilterelement so in der Umgebungsluftreinigungsvorrichtung 1009,1010,1017,1018 anzuordnen, dass die Filtertaschen 15 mit ihren Hohlräumen 12, die die jeweiligen Anströmseiten bilden, in Fahrtrichtung nach vorne weisen. Um ein zu starkes Aufblähen der Filtertaschen 15 durch die Anströmung zu verhindern, können einander gegenüberliegende flächige Filtermediumabschnitte mit einer geeigneten Fadenlänge vernäht sein. Ansonsten ist der Aufbau solcher Filterelemente dem Fachmann bekannt. Taschenfilterelemente sind beispielsweise aus dem Bereich der Ansaugfilter für Gasturbinen oder dem HVAC-Bereich am Markt in einer Vielzahl von Abmessungen verfügbar. Das gezeigte Taschenfilterelement 100,101 hat die Abmessungen 287 mm x 592 mm x 365 mm.

Ferner ist in Fig. 9 ein V-Filter-Element 100,101 gezeigt, das vier in einer V-Form zueinander angeordnete Filtereinheiten aufweist, die jeweils durch zwei Flachfilterelemente 13 gebildet werden, wobei die Flachfilterelemente 13 beispielsweise einen gefalteten Filterbalg aufweisen. Das gezeigte V-Filter-Element 100,101 umfasst daher acht Flachfilterelemente 13. Das V-Filter-Element 100,101 verfügt über einen Rahmen 11, an dem die V-förmigen Filtereinheiten befestigt sind. An der dem Rahmen 11 abgewandten Unterseite sind jeweils zwei Flachfilterelemente, die eine V-förmige Filtereinheit bilden, jeweils fluiddicht miteinander verbunden. Die das 'V' begrenzenden Seitenflächen sind jeweils durch eine flächige Abdeckung 14 fluiddicht verschlossen. Zum Verbau gilt bereits in Bezug auf Fig. 8 Ausgeführtes: Das V-Filter-Element 100,101 wird geeigneterweise so in die Umgebungsluftreinigungsvorrichtung 1009,1010,1017,1018 eingesetzt, dass die Hohlräume 12 zur Anströmseite weisen, d. h. beim Verbau in dem erfindungsgemäßen Straßenfahrzeug 1 in Fahrtrichtung. Die Abmessungen des V-Filter-Elements betragen 287 mm x 592 mm x 300 mm. Die Faltenhöhen der jeweiligen Flachfilterelemente 13 betragen in der gezeigten Ausführungsform 25 mm.

Sowohl für das in Fig. 8 gezeigte Taschenfilterelement als auch für das in Fig. 9 gezeigte V-Filter-Element gilt, dass von diesen eine geeignete Anzahl nebeneinander angeordnet werden kann, um eine Umgebungsluftreinigungsvorrichtung 1009,1010,1017,1018 mit einer hinreichenden Breite zu schaffen. Beide Varianten sind in den zuvor beschriebenen Ausführungsformen von Straßenfahrzeugen oder Umgebungsluftreinigungsvorrichtungen 1009,1010,1017,1018 verwendbar.

Als Filtermaterialien können vollsynthetische Vliese, Glasfaser- oder Cellulosemedien sowie Kombinationen hieraus eingesetzt werden, die zusätzlich auch noch über eine Elektretwirkung verfügen können bzw. entsprechend ausgerüstet sind, um ein gutes Verhältnis aus Druckverlust und Abscheideleistung zu erzielen. Vorzugsweise besitzen diese Medien hydrophobe Eigenschaften und zeichnen sich durch eine gute Wasserstabilität aus. Es kann auch ein Filtermedium eingesetzt werden, das vollständig aus Cellulose besteht. Der bevorzugte Berstdruck der Filterelemente soll insbesondere über 500 Pa, bevorzugt über 1.000 Pa betragen. Die bevorzugte Staubkapazität der Filterelemente beträgt bevorzugt zumindest 300 g, bevorzugt mehr als 700 g.

## Patentansprüche

1. Umgebungsluftreinigungsvorrichtung (1009,1010,1017,1018) für ein Straßenfahrzeug (1), die insbesondere zur Entfernung von Stäuben, insbesondere Feinstaub, und/oder Gasen aus der Umgebungsluft ausgebildet ist, wobei die Umgebungsluftreinigungsvorrichtung (1009,1010,1017,1018) zumindest ein Filterelement (100,101) aufweist und in einem Außenbereich des Straßenfahrzeugs (1) anordenbar ist, **dadurch gekennzeichnet, dass** die Umgebungsluftreinigungsvorrichtung (1009,1010,1017,1018) dazu ausgebildet ist, an einem Fahrzeugheck mittels einer lösbaren Kupplung (1030) befestigt zu werden, wobei die Umgebungsluftreinigungsvorrichtung (1009,1010,1017,1018) zumindest eine mit einer fahrzeugseitigen Kupplungskomponente (1031) korrespondierende Gegenkupplung (1032) aufweist, die eine Anhängerkupplung (1032) aufweist, insbesondere für eine Kugelkupplung.

2. Umgebungsluftreinigungsvorrichtung (1009,1010,1017,1018) nach Anspruch 1,
**dadurch gekennzeichnet, dass**
- die Umgebungsfuftreinigungsvorrichtung (1009,1010,1017,1018) zumindest ein Aufnahmegehäuse aufweist, in dem das zumindest eine Filterelement (100,101) aufgenommen ist, das zumindest eine Eintrittsöffnung und eine Austrittsöffnung aufweist und insbesondere mittels der Gegenkupplung (1032) mit dem Straßenfahrzeug (1) verbindbar ist und/oder
- die Umgebungstuftreinigungsvorrichtung (1009,1010,1017,1018) zumindest zwei Filterelemente (100,101) aufweist, die insbesondere in Fahrzeugquerrichtung oder Fahrzeughochrichtung nebeneinander angeordnet sind, insbesondere mit einem vorbestimmten Abstand dazwischen.

3. Umgebungsluftreinigungsvorrichtung (1009,1010,1017,1018) nach einem der vorhergehenden Ansprüche,
**dadurch gekennzeichnet, dass**
die Umgebungsluftreinigungsvorrichtung (1009,1010,1017,1018) zumindest ein Strömungsleitelement (1119) aufweist, das bevorzugt an einer unteren, in Fahrzeugquerrichtung verlaufenden Kante der Umgebungsluftreinigungsvorrichtung (1009,1010,1017,1018), bevorzugt in Fahrtrichtung hinten, vorliegt,

4. Umgebungsluftreinigungsvorrichtung (1009,1010,1017,1018) nach einem der vorhergehenden Ansprüche,
**dadurch gekennzeichnet, dass**
die Umgebungsluftreinigungsvorrichtung (1009,1010,1017,1018) dem zumindest einen Filterelement strömungsmäßig vorgeschaltet einen Vor- bzw. Grobabscheider (1112) aufweist, insbesondere ein Abscheidegitter, ein Abscheidenetz, ein Prallblech und/oder ein Vorabscheidervlies.

5. Umgebungsluftreinigungsvorrichtung (1009,1010,1017,1018) nach einem der vorhergehenden Ansprüche,
**dadurch gekennzeichnet, dass**
die Umgebungsluftreinigungsvorrichtung (1009,1010,1017,1018) dem zumindest einen Filterelement (100,101) strömungsmäßig vorgeschaltet einen Wasserabscheider (1112, 1121) aufweist, insbesondere umfassend einen Lamellenabscheider und/oder eine hydrophobe Abscheidelage, und/oder insbesondere abhängig von einem Regensensorsignal und/oder Scheibenwischersignal schließbare Klappen oder Lamellen.

6. Umgebungsluftreinigungsvorrichtung (1009,1010,1017,1018) nach einem der vorhergehenden Ansprüche, mit einer Montageöffnung für das Filterelement (1116), die seitlich, vertikal oder, bezogen auf eine bestimmungsgemäße Fahrtrichtung in einem Montagezustand, hinten angeordnet ist und/oder mit einem Schubladenmechanismus und/oder lösbaren Rastverbindungen für die Montage des Filterelements (1116).

7. Umgebungsluftreinigungsvorrichtung (1009,1010,1017,1018) nach einem der vorhergehenden Ansprüche,
**dadurch gekennzeichnet, dass**
- das zumindest eine Filterelement (100,101) eine Anströmfläche von zumindest 100 mm x 250 mm aufweist, bevorzugt zumindest 150 mm x 500 mm und/oder das Volumen des zumindest einen Filterelements (100,101) zumindest 6,5 l beträgt, bevorzugt zumindest 15 l, und/oder
- die Netto-Filterfläche des zumindest einen Filterelements (100,101) zumindest 3 m², bevorzugt zumindest 7 m², am meisten bevorzugt zumindest 15 m², beträgt.

8. Umgebungsluftreinigungsvorrichtung (1009,1010,1017,1018) nach einem der vorhergehenden Ansprüche,
**dadurch gekennzeichnet, dass**
die Umgebungsluftreinigungsvorrichtung (1009,1010,1017,1018) einen Druckverlust bei einer Anströmung des Filterelements (100,101, 1116) mit Luft bei Normbedingungen mit 1,5 m/s von höchstens 200 Pa, bevorzugt bei 2,5 m/s von höchstens 250 Pa, aufweist.

9. Umgebungsluftreinigungsvorrichtung (1009,1010,1017,1018) nach einem der vorhergehenden Ansprüche,
**dadurch gekennzeichnet, dass**
- das zumindest eine Filterelement (100,101,1116) ein gefaltetes Filterelement (100,101,1116) ist, das bevorzugt dazu ausgebildet ist, so verbaut zu werden, dass seine Falten in Fahrzeuglängsrichtung oder Fahrzeughochrichtung verlaufen, wobei besonders bevorzugt eine Faltenhöhe des Filterelements (100,101,1116) zumindest 100 mm beträgt, und/oder
- das zumindest eine Filterelement (100,101,1116) ein Kompaktelement ist und/oder
- das zumindest eine Filterelement (100,101,1116) ein Taschenfilterelement ist, das zumindest drei Filtertaschen, bevorzugt vier oder mehr Filtertaschen (15), aufweist und/oder
- das zumindest eine Filterelement (100,101,1116) ein V-Filter-Element ist, das zumindest drei V-förmige Filtereinheiten aufweist, und/oder
- das zumindest eine Filterelement (100,101,1116) zumindest der Partikelfilterklasse M6 nach DIN EN 779 entspricht.

10. Umgebungsluftreinigungsvorrichtung (1009,1010,1017,1018) nach einem der vorhergehenden Ansprüche, umfassend eine Luftfördereinrichtung (1113) zur Unterstützung der Durchströmung, insbesondere zumindest einen Ventilator oder Gebläse (1113), die insbesondere ein elektrisches Anschlusselement aufweist, das mit einer Stromversorgung eines Straßenfahrzeugs (1) verbindbar ist.

11. Straßenfahrzeug (1), insbesondere Personenkraftwagen oder Lastkraftwagen, insbesondere leichter Lastkraftwagen, insbesondere angetrieben mit einer Brennkraftmaschine und/oder Elektroantrieb, das eine Umgebungsluftreinigungsvorrichtung aufweist, die insbesondere zur Entfernung von Stäuben, insbesondere Feinstaub, und/oder Gasen aus der Umgebungsluft ausgebildet ist, wobei die Umgebungsluftreinigungsvorrichtung zumindest ein Filterelement (100,101,1116) aufweist und in einem Außenbereich des Straßenfahrzeugs (1) angeordnet ist, **dadurch gekennzeichnet, dass** die Umgebungsluftreinigungsvorrichtung eine Umgebungsluftreinigungsvorrichtung (1009,1010,1017,1018) nach einem der Ansprüche 1 bis 10 ist, die an einem Fahrzeugheck mittels einer lösbaren Kupplung (1030) befestigt ist, wobei das Straßenfahrzeug (1) eine fahrzeugseitige Kupplungskomponente (1031) aufweist, die mit der korrespondierenden Gegenkupplung (1032) der Umgebungsluftreinigungsvorrichtung (1009,1010,1017,1018) lösbar verbunden ist, wobei die fahrzeugseitige Kupplungskomponente (1031) eine Anhangerkupplung (1031), insbesondere Kugelkupplung (1031), ist.

12. Straßenfahrzeug (1) nach Anspruch 11,
**dadurch gekennzeichnet, dass**
das zumindest eine Filterelement (100,101,1116) der Umgebungsluftreinigungsvorrichtung (1009,1010,1017,1018) in Fahrzeuglängsrichtung und/oder zumindest teilweise senkrecht zu dieser durchströmbar ist, insbesondere in Fahrzeughochrichtung von unten nach oben.

13. Straßenfahrzeug (1) nach einem der Ansprüche 11 oder 12,
**dadurch gekennzeichnet, dass**
die Umgebungsluftreinigungsvorrichtung (1009,1010,1017,1018) sich in Fahrzeugquerrichtung über einen wesentlichen Teil einer Fahrzeugbreite erstreckt, bevorzugt über zumindest 30 % der Fahrzeugbreite, besonders bevorzugt über zumindest 40 %.

## Claims

1. Ambient air purification device (1009,1010,1017,1018) for a road vehicle (1), which is in particular designed to remove dusts, in particular fine particulate matter, and/or gases from the ambient air, wherein the ambient air purification device (1009,1010,1017,1018) features at least one filter element (100,101) and can be disposed in the outer area of the road vehicle (1), **characterized in that** the ambient air purification device (1009,1010,1017,1018) is designed to be attached to a vehicle tail using a detachable coupling (1030), wherein the ambient air purification device (1009,1010,1017,1018) features at least one counter coupling (1032) which corresponds to a vehicle-sided coupling component (1031) and features a trailer hitch (1032), in particular for a ball-shaped coupling.

2. Ambient air purification device (1009,1010,1017,1018) according to claim 1, **characterized in that**
- the ambient air purification device (1009,1010,1017,1018) features at least one receiving housing in which the at least one filter element (100,101) is received which features at least one inlet opening and one outlet opening and is connectable to the road vehicle (1) in particular by using the counter coupling (1032) and/or
- the ambient air purification device (1009,1010,1017,1018) features at least two filter elements (100,101) which are disposed adjacent to each other, in particular in vehicle transverse direction or vehicle vertical direction, in particular with a predetermined spacing therebetween.

3. Ambient air purification device (1009,1010,1017,1018) according to one of the preceding claims,
**characterized in that**
the ambient air purification device (1009,1010,1017,1018) features at least one flow guiding element (1119) which is preferably located at a lower edge of the ambient air purification device (1009,1010,1017,1018) running in the vehicle transverse direction, preferably at the rear in the direction of travel.

4. Ambient air purification device (1009,1010,1017,1018) according to one of the preceding claims,
**characterized in that**
the ambient air purification device (1009,1010,1017,1018) features a pre-separator or coarse separator (1112) fluidically upstream of the at least one filter element, in particular a separating grid, a separating net, a baffle plate and/or a pre-separator fleece.

5. Ambient air purification device (1009,1010,1017,1018) according to one of the preceding claims,
**characterized in that**
the ambient air purification device (1009,1010,1017,1018) features a water separator (1112, 1121) fluidically upstream of the at least one filter element (100, 101), in particular comprising a lamella separator and/or a hydrophobic separating layer, and/or, in particular depending on a rain sensor signal and/or a windshield wiper signal, closable flaps or lamellae.

6. Ambient air purification device (1009,1010,1017,1018) according to one of the preceding claims, having an assembly opening for the filter element (1116) which is disposed laterally, vertically or, with regard to an intended direction of travel in an assembled state, at the rear, and/or having a drawer mechanism and/or detachable latching connections for the assembly of the filter element (1116).

7. Ambient air purification device (1009,1010,1017,1018) according to one of the preceding claims,
**characterized in that**
- the at least one filter element (100,101) features an inflow surface of at least 100 mm x 250 mm, preferably at least 150 mm x 500 mm and/or the volume of the at least one filter element (100,101) amounts to at least 6.5 l, preferably at least to 15 l, and/or
- the net filter area of the at least one filter element (100,101) amounts to at least 3 m², preferably to at least 7 m², most preferably at least to 15 m².

8. Ambient air purification device (1009,1010,1017,1018) according to one of the preceding claims,
**characterized in that**
the ambient air purification device (1009,1010,1017,1018) features a pressure loss when air flows to the filter element (100,101,1116) at standard conditions at 1.5 m/s of at most 200 Pa, preferably at 2.5 m/s of at most 250 Pa.

9. Ambient air purification device (1009,1010,1017,1018) according to one of the preceding claims,
**characterized in that**
- the at least one filter element (100,101,1116) is a folded filter element (100, 101,1116) which is preferably designed in such a way that its folds extend in vehicle longitudinal direction or vehicle vertical direction, wherein particularly preferably a fold height of the filter element (100,101,1116) is at least 100 mm, and/or
- the at least one filter element (100,101,1116) is a compact element and/or
- the at least one filter element (100,101,1116) is a bag filter element which features at least three filter bags, preferably four or more filter bags (15) and/or
- the at least one filter element (100,101,1116) is a V-filter element which features at least three V-shaped filter arrangements, and/or
- the at least one filter element (100,101,1116) corresponds at least to the particulate filter class M6 according to DIN 779.

10. Ambient air purification device (1009,1010,1017,1018) according to one of the preceding claims, comprising an air-conveying device (1113) for supporting the throughflow, in particular at least one fan or blower (1113), which features in particular a connecting element which is connectable to a power supply of a road vehicle (1).

11. Road vehicle (1), in particular passenger car or truck, in particular light truck, in particular driven by an internal combustion engine and/or electric drive which features an ambient air purification device which is in particular designed to remove dusts, in particular fine particulate matter, and/or gases from the ambient air, wherein the ambient air purification device features at least one filter element (100,101,1116) and is disposed in the outer area of the road vehicle (1), **characterized in that** the ambient air purification device is an ambient air purification device (1009,1010,1017,1018) according to one of the claims 1 to 10 which is attached to a vehicle tail using a detachable coupling (1030), wherein the road vehicle (1) features a vehicle-sided coupling component (1031) which is detachably connected to the corresponding counter coupling (1032) of the ambient air purification device (1009,1010,1017,1018), wherein the vehicle-sided coupling component (1031) is a trailer hitch (1031), in particular a ball-shaped coupling (1031).

12. Road vehicle (1) according to claim 11,
**characterized in that**
the at least one filter element (100,101,1116) of the ambient air purification device (1009,1010,1017,1018) can be flowed through in the vehicle longitudinal direction and/or at least partially perpendicularly to it, in particular in the vehicle vertical direction from bottom to top.

13. Road vehicle (1) according to one of the claims 11 or 12,
**characterized in that**
the ambient air purification device (1009,1010,1017,1018) extends in the vehicle transverse direction over a substantial part of a vehicle width, preferably over at least 30% of the vehicle width, particularly preferably over at least 40%.

## Revendications

1. Dispositif de purification de l'air ambiant (1009,1010,1017,1018) pour un véhicule routier (1) conçu notamment pour éliminer des poussières, notamment des poussières fines, et/ou des gaz de l'air ambiant, dans lequel le dispositif de purification de l'air ambiant (1009,1010,1017,1018) présente au moins un élément filtrant (100,101) et peut être disposé dans une zone extérieure du véhicule routier (1), **caractérisé en ce que** le dispositif de purification de l'air ambiant (1009,1010,1017,1018) est conçu pour être attaché à l'arrière du véhicule au moyen d'un accouplement (1030) détachable, dans lequel le dispositif de purification de l'air ambiant (1009,1010,1017,1018) présente au moins un contre-couplage (1032) correspondant avec un composant de couplage (1031), côté véhicule, et présentant un attelage de remorque (1032), notamment pour un accouplement à billes.

2. Dispositif de purification de l'air ambiant (1009,1010,1017,1018) selon la revendication 1,
**caractérisé en ce que**
- le dispositif de purification de l'air ambiant (1009,1010,1017,1018) présente au moins un boîtier de logement dans lequel est logé au moins un élément filtrant (100,101) qui présente au moins une ouverture d'entrée et une ouverture de sortie et qui peut relié au véhicule routier (1) notamment au moyen d'un contre-couplage (1032) et/ou
- le dispositif de purification de l'air ambiant (1009,1010,1017,1018) présente au moins deux éléments filtrants (100,101) qui sont disposés l'un à côté de l'autre, notamment en direction transversale du véhicule ou en direction verticale du véhicule, notamment avec un espacement prédéterminé entre eux.

3. Dispositif de purification de l'air ambiant (1009,1010,1017,1018) selon l'une des revendications précédentes,
**caractérisé en ce que**
le dispositif de purification de l'air ambiant (1009,1010,1017,1018) présente au moins un élément de guidage du flux (1119) qui est situé de préférence sur une arête inférieure du dispositif de purification de l'air ambiant (1009,1010,1017, 1018) s'étendant en direction transversale du véhicule, de préférence à l'arrière dans le sens de la marche.

4. Dispositif de purification de l'air ambiant (1009,1010,1017,1018) selon l'une des revendications précédentes,
**caractérisé en ce que**
le dispositif de purification de l'air ambiant (1009,1010,1017,1018) présente, placé fluidiquement en amont de l'élément filtrant, au moins au nombre d'un, un pré-séparateur ou séparateur grossier (1112), notamment une grille de séparation, un filet de séparation, une tôle de chicane et/ou un non-tissé du pré-séparateur.

5. Dispositif de purification de l'air ambiant (1009,1010,1017,1018) selon l'une des revendications précédentes,
**caractérisé en ce que**
le dispositif de purification de l'air ambiant (1009,1010,1017,1018) présente, placé fluidiquement en amont de l'élément filtrant (100,101), au moins au nombre d'un, un séparateur d'eau (1112,1121), notamment comprenant un séparateur à lamelles et/ou une couche de séparation hydrophobe, et/ou notamment en fonction d'un signal de capteur de pluie et/ou d'un signal d'essuie-glace des volets des lamelles qui peuvent être fermés.

6. Dispositif de purification de l'air ambiant (1009,1010,1017,1018) selon l'une des revendications précédentes, ayant une ouverture de montage pour l'élément filtrant (1116) qui est disposée latéralement, verticalement ou, par rapport à un sens de la marche conforme à l'utilisation dans un état de montage, à l'arrière, et/ou ayant un mécanisme à tiroirs et/ou des liaisons par encliquetage pour le montage de l'élément filtrant (1116).

7. Dispositif de purification de l'air ambiant (1009,1010,1017,1018) selon l'une des revendications précédentes,
**caractérisé en ce que**
- l'élément filtrant (100,101), au moins au nombre d'un, présente une surface d'afflux d'au moins 100 mm x 250 mm, de préférence au moins 150 mm x 500 mm et/ou le volume de l'élément filtrant (100,101), au moins au nombre d'un, est au moins 6,5 l, de préférence au moins 15 l, et/ou
- la surface filtrante nette de l'élément filtrant (100, 101), au moins au nombre d'un, est au moins 3 m², de préférence au moins 7 m², le plus préférablement au moins 15 m².

8. Dispositif de purification de l'air ambiant (1009,1010,1017,1018) selon l'une des revendications précédentes,
**caractérisé en ce que**
le dispositif de purification de l'air ambiant (1009,1010,1017,1018) présente une perte de pression lors de l'entrée du flux d'air dans l'élément filtrant (100,101,1116) dans des conditions standard avec 1,5 m/s ne dépassant pas 200 Pa, de préférence avec 2,5 m/s ne dépassant pas 250 Pa.

9. Dispositif de purification de l'air ambiant (1009,1010,1017,1018) selon l'une des revendications précédentes,
**caractérisé en ce que**
- l'élément filtrant (100,101,1116), au moins au nombre d'un, est un élément filtrant plié (100,101,1116) conçu de préférence pour être monté de telle manière que ses plis s'étendent en direction longitudinale du véhicule ou en direction verticale du véhicule, dans lequel de façon particulièrement préférée une hauteur de plis de l'élément filtrant (100,101,1116) s'élève au moins à 100 mm, et/ou
- l'élément filtrant (100,101,1116) est un élément compact, et/ou
- l'élément filtrant (100,101,1116), au moins au nombre d'un, est un élément de filtre à poche qui présente au moins trois poches filtrantes, de préférence quatre ou plusieurs poches filtrantes (15), et/ou
- l'élément filtrant (100,101,1116), au moins au nombre d'un, est un élément de filtre en forme de V qui présente au moins trois unités filtrantes en forme de V, et/ou
- l'élément filtrant (100,101,1116), au moins au nombre d'un, correspond au moins à la classe de filtre à particules M6 selon la norme DIN EN 779.

10. Dispositif de purification de l'air ambiant (1009,1010,1017,1018) selon l'une des revendications précédentes, comprenant un convoyeur d'air (1113) pour soutenir le flux, notamment au moins un ventilateur ou une soufflante (1113) et qui présente notamment un élément de raccordement électrique connectable à l'alimentation en courant d'un véhicule routier (1).

11. Véhicule routier (1), notamment véhicule automobile ou camion, notamment camion léger, notamment entraîné par un moteur à combustion interne et/ou entraînement électrique qui présente un dispositif de purification de l'air ambiant conçu notamment pour éliminer des poussières, notamment des poussières fines, et/ou des gaz de l'air ambiant, dans lequel le dispositif de purification de l'air ambiant présente au moins un élément filtrant (100,101,1116) et est disposé dans une zone extérieure du véhicule routier (1), **caractérisé en ce que** le dispositif de purification de l'air ambiant est un dispositif de purification de l'air ambiant (1009,1010,1017,1018) selon l'une quelconque des revendications 1 à 10, qui est attaché à l'arrière du véhicule au moyen d'un accouplement (1030) détachable, dans lequel le véhicule routier (1) présente un composant de couplage (1031), côté véhicule, qui est relié de manière amovible au contre-couplage (1032) correspondant du dispositif de purification de l'air ambiant (1009,1010,1017,1018), dans lequel le composant de couplage (1031), côté véhicule, est un attelage de remorque (1031), notamment pour un accouplement à billes (1031).

12. Véhicule routier (1) selon la revendication 11,
**caractérisé en ce que**
l'élément filtrant (100,101,1116), au moins au nombre d'un, du dispositif de purification de l'air ambiant (1009,1010,1017,1018) peut être parcouru en direction longitudinale du véhicule et/ou au moins partiellement verticalement par rapport à celle-ci, notamment en direction verticale du véhicule de bas en haut.

13. Véhicule routier (1) selon l'une des revendications 11 ou 12,
**caractérisé en ce que**
le dispositif de purification de l'air ambiant (1009,1010,1017,1018) s'étend en direction transversale du véhicule sur une partie substantielle de la largeur du véhicule, de préférence sur au moins 30 % de la largeur du véhicule, de façon particulièrement préférée sur au moins 40 %.
